# EUROPEAN PATENT SPECIFICATION

(11) **EP 2 070 012 B1**
(45) Date of publication and mention of the grant of the patent: **15.06.2011**
(21) Application number: 07841617.9
(22) Date of filing: 30.08.2007
(51) Int. Cl.: G06K 19/06

(54) **MULTIPLE BARCODE FORMAT LABELLING SYSTEM AND METHOD**
ETIKETTIERUNGSSYSTEM UND -VERFAHREN MIT MEHREREN BARCODES
SYSTÈME ET PROCÉDÉ D'ÉTIQUETAGE PAR CODES-BARRES DE FORMATS MULTIPLES

(30) Priority: 30.08.2006 US 823920 P
(43) Date of publication of application: 17.06.2009
(73) Proprietor: Becton, Dickinson and Company, Franklin Lakes, NJ 07417 (US)
(72) Inventor: HARROP, Andrew, Okehampton Devon EX204PS (GB)
(74) Representative: von Kreisler Selting Werner
(86) International application number: PCT/US2007/077223
(87) International publication number: WO 2008/028028

(56) References cited:
- EP-A- 1 605 396
- US-A- 5 401 110
- US-A- 6 102 289
- US-B1- 6 599 476

## Description

### BACKGROUND OF THE INVENTION

### Field of the Invention

The present invention relates generally to a sample collection container comprising a label.

The labels include multiple barcodes having different formats and encoding the same information.

### Description of Related Art

It is common for medical specimens to be collected by a technician in a collection container for subsequent testing. Blood specimens are typically collected in blood collection tubes. These tubes are transported or shipped to a test facility together with documentation relating to the particular test and to the patient from which the blood specimen was taken.

Much of the information which identifiers the type of tube, the test, and/or the patient, can be reduced to a scannable bar code which can be placed on the blood collection tube. The bar code is typically applied to the tube by use of an adhesive label where it can be conveniently scanned by a bar code scanner to provide the requisite information to the medical technician. In many instances, automated testing equipment is used for clinical testing of multiple sampling containers in an assembly line configuration. Such automated equipment typically involves some form of bar code scanning in order to associate the proper information with the correct sample. Bar code scanning is often done with a hand-held scanner, or alternatively, with a fixed bar code reader.

In any case, it is necessary to properly orient the blood collection tube so that the scannable bar code is conveniently presented to the bar code reader. Quite often, orientation requires manual rotation of the tube to assure that the scannable bar code can be read by the scanner. In other situations, pick and place mechanisms may be used to lift and rotate the tube to provide such orientation. As may be appreciated, individual manual rotation of a plurality of tubes is difficult, time-consuming and subject to manual error. Mechanical devices which lift and rotate the tube are cumbersome to use and costly.

Another prior art solution to the alignment of bar codes is to apply the bar code continuously around the circumference of the tube. This allows the bar code to be read regardless of the rotational orientation of the tube. However, employing a bar code label of this type has several disadvantages. First, due to the increased size of the bar code, there is little additional space for the user to apply requisite information at the blood collection site. Additionally, continuous bar code labels of this type are expensive to manufacture and difficult to apply.

Furthermore, it is also known in the prior art to utilize dual barcodes with data storage cartridges. United States Patent No. 6,758,400 to Reasoner et al. discloses a system that utilizes two barcodes where each of the barcodes is partially obscured. After the partially obscured barcodes are read, an algorithm "stitches" the two barcodes together to create a single data element. However, this system requires additional software that is necessary to "stitch" the barcodes together. Barcodes of this type cannot be read with conventional barcode readers.

Additionally, it is also known in the prior art to include two barcodes having different formes on a single label. European Patent Application No. EP 0 736 854 discloses a label (10) having a barcode (12) of a first format and a barcode (14) of a second format printed thereon. More specifically, the label (10) is printed with a code 128 bar code (12) and an EAN barcode (14). The code 128 barcode (12) is adapted to be read by hand-held scanners and includes information concerning the price indicated on the label. The EAN bar code (14) can be read by a conventional scanner but not by the hand-held scanner and includes information indicating that the price of the product has been reduced. However, all of the information on this label and encoded by barcode (10) and barcode (12) cannot be accurately read if one of the barcodes is partially or totally obscured.
US-A-6102289 discloses a hybrid barcode comprising a first area having a first barcode printed thereon and a second area having a second barcode printed thereon, wherein the first barcode is of a first format, the second barcode is of a second format and each barcode encodes a least a subset of identical information.

### SUMMARY OF THE INVENTION

A need therefore exists for a sample collection container containing a label whith barcodes that can accurately read even if one of the barcodes partially or totally obscured.

An embodiment of the invention is directed to a sample collection container containing a label positionable on the sample collection container comprising:
a first area having a first barcode printed thereon; and
a second area having a second barcode printed thereon,
   characterized in that the first barcode is of a first format, the second barcode is of a second format and each barcode encodes at least a subset of identical information; and
the label includes an alignment area and the sample collection container includes alignment symbology.

A further embodiment of the invention is directed to a method of identifying information corresponding to a sample collection container, the method comprising the steps of:
providing a sample collection container with a label adhered thereto, the label comprising: a first area having a first barcode of a first format printed thereon, a second area having a second barcode of a second format printed thereon, the first barcode and the second barcode encoding at least a subset of identical information, wherein the label includes an alignment area and the sample collection container includes alignment symbology such that the alignment area is in alignment with the alignment symbology of the sample container thereby allowing for proper positioning of the label on the sample container;
scanning the first area of the label to determine the information encoded thereon; and,
if the step of scanning the first area of the label fails, scanning the second area of the label to determine the information encoded thereon.

Preferred embodiments are apparent from the dependent claims.

The subset of identical information encoded in the first barcode and the second barcodes may be information identifying the patient, the type of sample, or date or time of sampling, or any combination thereof. Additionally, all of the information encoded in the first barcode may be identical to all of the information encoded in the second barcode.

The first format may be selected from the group of UPC, EAN, EANUCC, CODABAR CODE 39, CODE 128, Interleaved 2/5, Discrete 2/5, Postnet, BPO, CODE 49, CODE 16K, PDF417, AZTEC, DATAMATRIX and MAXICODE, etc., and the second format is selected from the group of UPC, EAN, EANUCC, CODABAR, CODE 39, CODE 128, Interleave 2/5, Discrete 2/5, Postnet, BPO, CODE 49, CODE 16K, PDF417, AZTEC, DATAMATRIX and MAXICODE, etc. In one embodiment, the first barcode is CODE 39 and the second barcode is CODE 128.

The label is adapted to be positioned on a sample collection container. The label further includes an alignment area and the sample collection container may include alignment symbology. The alignment area may therefore be aligned with the alignment symbology of the sample collection container, thereby allowing for proper positioning of the label on the sample collection container.

The subset of identical information encoded in the first barcode and the second barcode may be information identifying the patient, the type of sample, or date or time of sampling, or any combination thereof. Additionally, all of the information encoded in the first barcodes may be identical to all of the information encoded in the second barcode.

The first format may be selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE, etc., and the second format is selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE, etc. In one embodiment, the first barcode is CODE 39 and the second barcode is CODE 128.

The label includes an alignment area and the sample collection container includes alignment symbology. The alignment area may therefore be aligned with the alignment symbology of the sample collection container, thereby allowing for proper positioning of the label on the sample collection container.

In another embodiment, the invention is directed to a method of identifying information corresponding to a sample collection container. The method includes the steps of providing a sample collection container with a label adhered thereto. The label includes a first area having a first barcode of a first format printed thereon, a second area having a second barcode of a second format printed thereon. The first barcode and the second barcode encode at least a subset of identical information. The label includes an alignment area and the sample collection container includes an alignment symbology. After the label has been adhered to the sample collection tube the first area of the label is scanned to determine the information encoded thereon. If the step of scanning the first area of the label fails, the second area of the label is scanned to determine the information encoded thereon. At least the subset of identical information may be at least one of a content, a type, a patient and a test procedure performed corresponding to the sample collection tube. All of the information encoded in the first barcode may be identical to all of the information encoded in the second barcode. The steps of scanning may be performed by a barcode reader of an automated testing station,

These and other features and characteristics of the present invention, as well as the methods of operation and functions of the related elements of structures and the combination of parts and economies of manufacture, will become more apparent upon consideration of the following description and the appended claims with reference to the accompanying drawing, all of which form a part of this specification, wherein like reference numerals designate corresponding parts in the various figures. As used in the specification, and the claims, the singular form of "a", "an", and "the" include plural referents unless the context clearly dictates otherwise.

### BRIEF DESCRIPTION OF THE DRAWINGS

**FIG. 1** is a top plan view of a sample collection tube with a label including a first and second barcode in accordance with an embodiment of the present invention;

**FIG. 2A** illustrates data encoded using various linear barcode formats;

**FIG. 2B** illustrates barcodes having a two-dimensional barcode format;

**FIG. 3** is a side view of the sample collection tube of **FIG. 1** with scanning areas provided thereon;

**FIG. 4** is a top plan view of an alternate embodiment of a sample collection container in accordance with an embodiment of the present invention;

**FIG. 5A** is a top plan view of a sample collection container having a first label **with** alignment symbology and identification symbology in accordance with an embodiment of the present invention;

**FIG. 5B** is a top plan view of a second label having a first and second barcode and an alignment area corresponding to the alignment symbology of the first label shown in **FIG. 5A****;**

**FIG. 5C** is a portion of a view of the second label of **FIG. 5B** showing the first and second barcodes enlarged for magnification purposes;

**FIG. 6A** is a top plan view of a sample collection container having a first label with alignment symbology and identification symbology in accordance with an embodiment of the present invention;

**FIG. 6B** is a top plan view of a second label having a first and second barcode and an alignment area corresponding to the alignment symbology of the first label shown in **FIG. 6A****;**

**FIG. 7A** is a top plan view of a sample collection container having a first label with alignment symbology and identification symbology in accordance with an embodiment of the present invention;

**FIG. 7B** is a top plan view of a second label having a first and second barcode and an alignment area corresponding to the alignment symbology of the first label shown in **FIG. 7A****;** and

**FIG. 7C** is a portion of a view of the first label of **FIG. 7A** showing a first barcode and a second barcode enlarged for magnification purposes.

### DETAILED DESCRIPTION OF THE PRESENT INVENTION

For purposes of the description hereinafter, the terms "upper", "lower", "right", "left", "vertical", "horizontal", "top", "bottom", "lateral", "longitudinal" and derivatives thereof shall relate to the invention as it is oriented in the drawing figures. However, it is to be understood that the invention may assume various alternative variations, except where expressly specified to the contrary. It is also to be understood that the specific devices illustrated in the attached drawings, and described in the following specification, are simply exemplary embodiments of the invention. Hence, specific dimensions and other physical characteristics related to the embodiments disclosed herein are not to be considered as limiting.

An embodiment of the present invention relates to automatic identification using barcodes on sample collection containers in automated systems. Such embodiment is specifically useful with patient specimens within the analytical systems of healthcare laboratories. A problem facing many users of such systems is the incompatibility of barcodes between different systems within a single laboratory or a group of laboratories. An incompatibility problem arises in various situations. For instance, the physical position of the barcode on the sample collection container may not suit multiple systems because the barcode may be obscured by the carrier of the system. Furthermore, the barcode format may not be compatible with certain systems. An embodiment of the present invention addresses these issues by providing a label with multiple barcodes in different positions and of different formats.

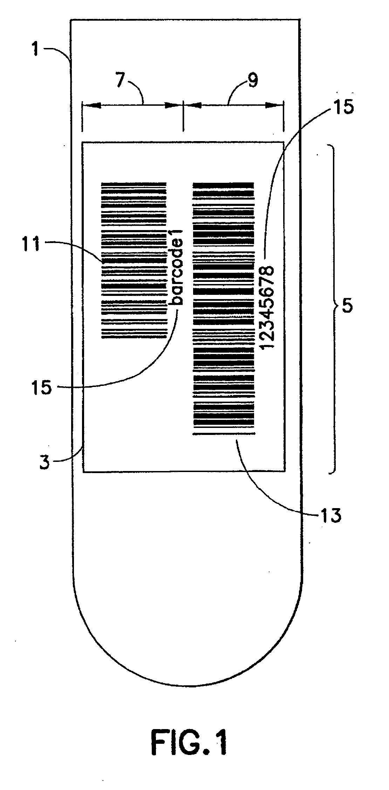

With reference to **FIG. 1****,** a container **1** includes a label **3** affixed to an outer surface of container **1** at a label bearing area **5.** Label **3** includes a first area **7** and a second area **9.** First area **7** includes a first barcode **11** printed thereon, and second area **9** includes a second barcode **13** printed thereon. First area **7** and second area **9** may further include alphanumeric indicia **15** printed thereon. First barcode **11** and second barcode **13** are each of different formats; however, at least a subset of information encoded in first barcode **11** is identical to at least a subset of information encoded in second barcode **13.**

First and second barcodes **11** and **13** are each capable of encoding a certain amount of information. Usually, first and second barcodes **11** and **13** are encoded with less information than they are capable of encoding. Accordingly, first and second barcodes **11** and **13** can be encoded with identical information. Thereafter, depending on the format of the barcodes, each of the barcodes may have additional capacity to encode additional information. Therefore, only a subset of the information encoded by the first barcode **11** and second barcode **13** is identical. However, in some embodiments of the invention, all of the information encoded in first and second barcodes **11** and **13** is identical.

Any type of identification may be encoded by the barcodes. For example, the barcodes may include a unique identifier, such as a unique series of numbers, with the identifier having no relevance or significance other than acting as a unique identifier. In such a case, the identifier may be useful as a tracking number when matched with other information, such as patient identification information. In such an embodiment, the barcodes may be associated with the collection containers directly at the manufacturer, such that the tracking number can be later associated with additional information, such as patient identification, at the point of use. In other embodiments, the information encoded by the barcodes may include, for example, an identification of the sample contained within the container, information identifying the patient, what analyses are to be conducted on the sample and sampling information such as date and time of sampling, and the like. In still further embodiments, the information encoded in the barcodes may include information related to the patient such as the Medical Record Number (MRN), Account Identifier, Wristband Identifier, Global Identifier, age of the patient, name of the patient, date of birth, disease state, diagnosis, billing information, insurance provider, account number, location, driver's license information, next of kin, and the like. Additionally, the information may include the Accession Number, which is a number associated with a collected specimen that is tied back to a patient in a Laboratory Information System (LIS). Other information that may be encoded in the barcodes and tied back to a patient in a LIS may include tube type, tube volume, test type, diagnostic test, time of test, location or any combination thereof. In additional embodiments, the information encoded in the barcodes may include information gathered at the time the label is printed such as the user ID of the specimen collector and/or the label print date and time.

Several different barcode formats may be utilized. The barcode format refers to a pre-determined manner in which barcodes encode alphanumeric text. Barcode formats may be classified into at least two categories: linear or one-dimensional; and two dimensional.

Linear bar code formats comprise a single row of bars and spaces that are read by scanning the bar code predominately along a scanning line substantially perpendicular (90°) to the individual elements comprising the barcode symbol. Scanners are frequently capable of interpreting linear bar codes even when scanned at significant departures from 90°.

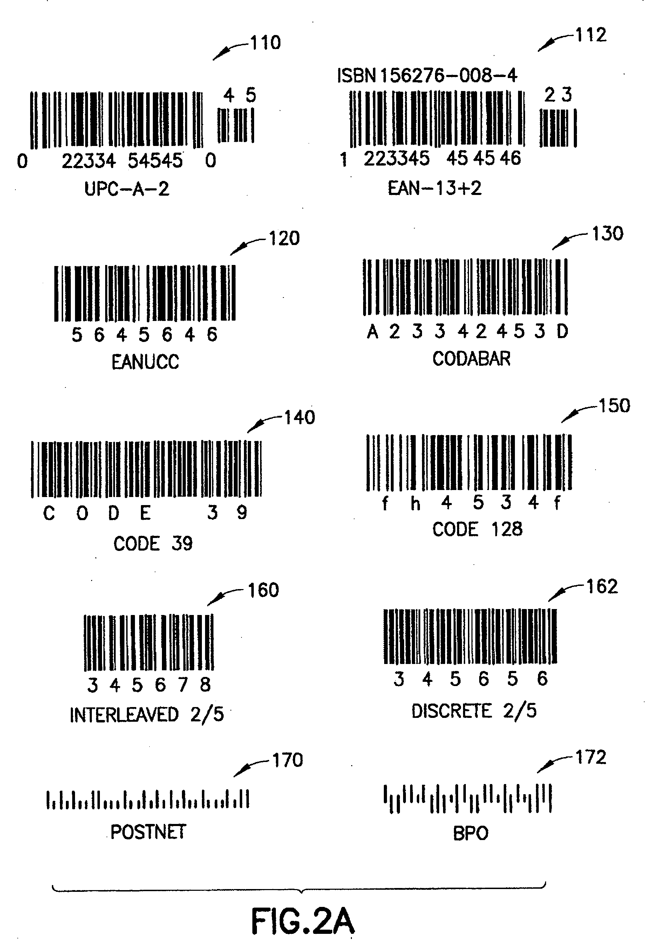

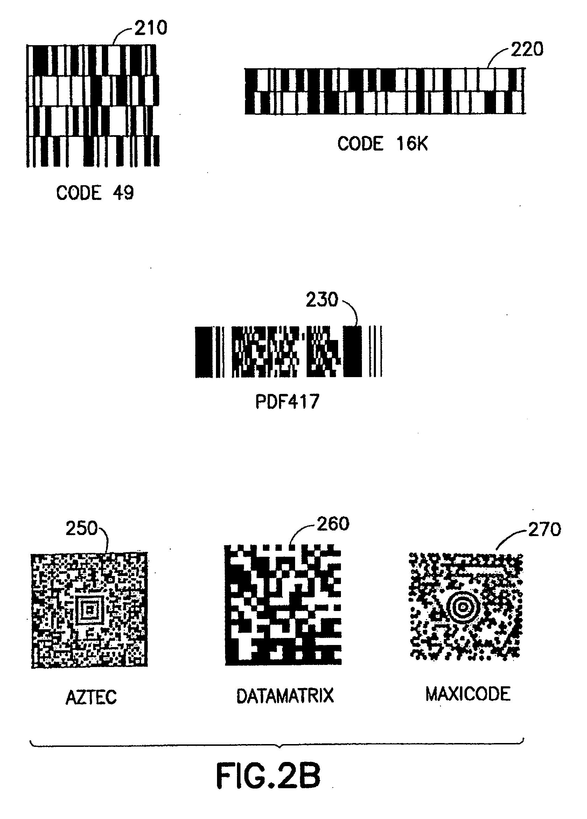

With reference to **FIGS. 2A** and **2B**, numerous barcode formats have been developed, each with features particular to its intended use. For example, code 39 is a variable length barcode used predominately in the non-retail field. Code 39 provides for an optional checksum character as well as concatenation of bar codes that are not continuous. Universal Product Code (including UPC-A and UPC-E) is a format used predominately in retail sales. UPC-A, for example allows for an 11 character code and a checksum character. The first character identifies the type of product being identified. The following 5 characters identify a manufacturer. The last 5 characters are typically used to identify a specific product.

**FIG. 2A** illustrates bar code symbols for a variety of linear barcode formats including Code 39 **(140),** interleaved 2 of 5 **(160),** discrete 2 of 5 **(162),** Universal Product Code +2 **(110),** European Article Number-13+2 **(112),** EANUCC **(120),** Code 128 **(150),** and Codabar **(130).** Information is encoded by varying the width and sequence of the bars. Some of these barcode formats may be susceptible to "short-scanning". For example, if a portion of a barcode is obscured during scanning, the scanning system may be adaptable to read a truncated number, such as with interleaved 2 of 5 **(160)** format. Accordingly, such barcode formats which are susceptible to short-scanning may be unsuitable for use with the present invention if the barcode is partially obscured by a transport mechanism, particularly in systems which are adaptable to short-scanning.

Other one-dimensional barcodes store information by varying the height of the bars. For example, PostNet **(170)** utilized by the United States Postal Service stores information by varying the height of the bars while maintaining a constant distance between bars. Another barcode format, BPO **172,** is used by the British Post Office. BPO 172 provides for varying lengths or positions of the bars along one axis while maintaining equidistant spacing between bars along a perpendicular axis.

Generally, linear barcode formats vary parameters such as the width of the bars, height of the bars, distance between bars, and combinations of these parameters to encode information.

Two-dimensional barcodes can be further classified as "stacked" or "matrix." Stacked bar codes comprise several rows of linear bar codes stacked one on top of another. Stacked bar codes may be read by multiple linear scans sufficiently displaced to ensure each of the individual rows is ultimately uniquely scanned. FIG. 2B illustrates examples of stacked bar codes including Code 49 **(210),** Code 16K **(220),** PDF417 **(230),** and CodaBlock **(240).**

Matrix barcode formats consist of polygonal arrays of data cells and orientation structures. Matrix bar code symbols are scanned using an array of sensors rather than a single sensor. Exemplary matrix bar code symbologies include Data Matrix **260,** Maxicode **270,** Aztec **250** and Vericode (not shown).

In accordance with an embodiment of the invention, label. **3** utilizes a Code 39 barcode and a Code 128 barcode.

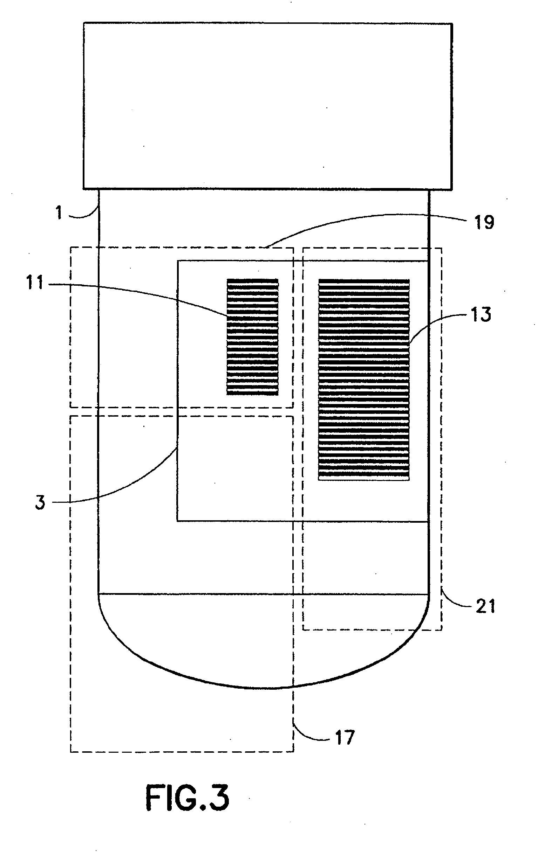

With reference to **FIG. 3****,** and with continuing reference to **FIG. 1****,** label **3** allows for the proper identification of sample collection container **1** regardless of the type of system that is used to read barcodes **11** and **13.** For instance, if the ADVIA LabCell and WorkCell systems (manufactured by Bayer Diagnostics) are utilized by a laboratory, a portion **17** of label **3** is obscured by a puck that is used to hold container **1.** Therefore, if container **1** is not oriented properly, the ADVIA LabCell and WorkCell systems cannot obtain an accurate reading of barcode **13** by scanning area **21** because it is obscured by the puck used to hold container **1.** However with barcode **11** also present on label **3** and including the same information, the scanner can scan area **19** and receive an accurate reading of barcode **11.** For example, in one particular method scanning area **21** of label **3** is scanned to determine the information encoded thereon. If this scan leads to a failed reading (i.e., the scanner cannot read the information encoded in barcode **13** due to an obstruction, etc.), the scanner can move to scanning area **19** of label **3** thereby scanning barcode **11** to determine the information encoded thereon. Accordingly, an accurate scan can be accomplished regardless of whether the equipment obstructs a portion of barcode **13,** since a second barcode **11** is also present with at least a subset of the same information although stored in a different barcode format.

Many other handling systems utilize auto-discriminating barcode scanners. Such scanners can detect and read barcodes having various formats. Accordingly, if first barcode **11** or second barcode **13** is partially or fully obscured by the handling system, the auto-discriminating barcode scanner can still identify the collection container **1** by reading the barcode that is not obscured by the handling system. Therefore, the system operator can place collection container **1** into the handling system without worrying about the orientation of collection container **1.**

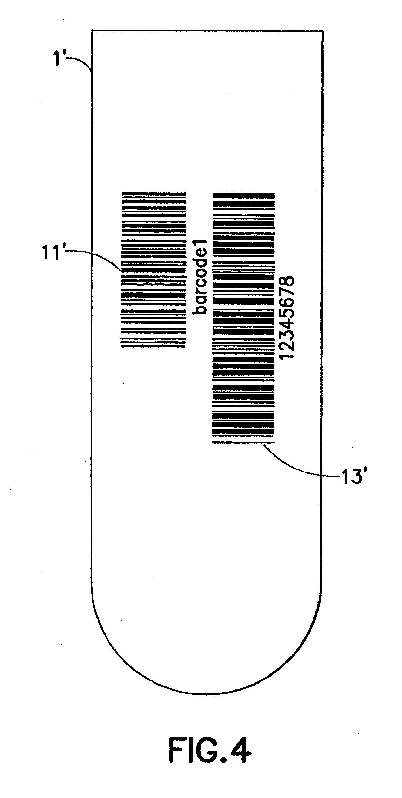

With reference to **FIG. 4****,** another embodiment of the present invention may provide for a sample collection container **1'** with a first barcode **11'** and a second barcode **13'** printed directly thereon. Similar to the first embodiment, first barcode **11'** and second barcode **13'** are of different barcode formats, but encode the same information.

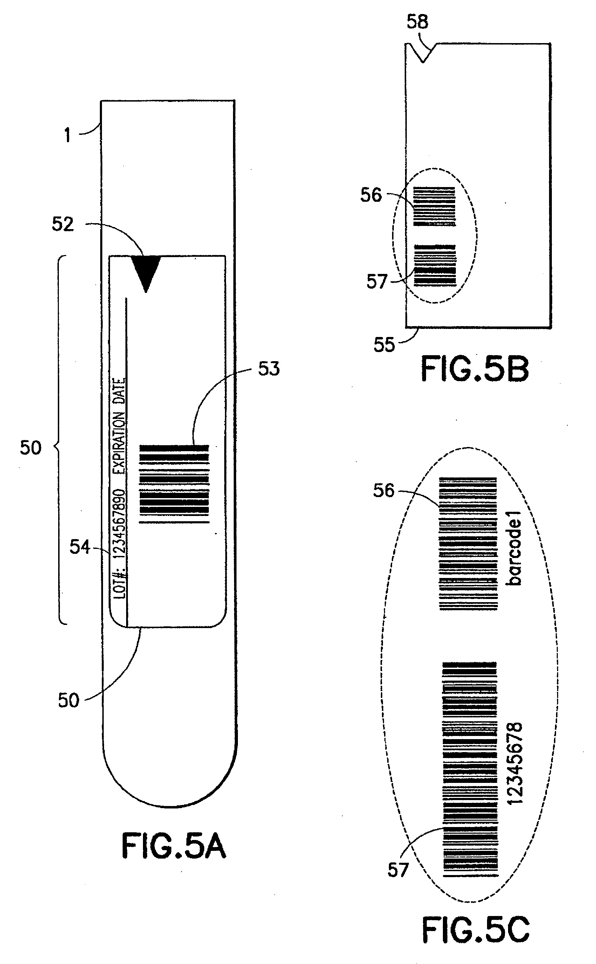

With reference to **FIGS. 5A-5C**, **6A**, **6B** and **7A-7C**, alternate embodiments of the present invention are illustrated. As shown in **FIG. 5A****,** container **1** includes a first label **50** affixed to the outer surface of container **1** or label bearing area **51,** with alignment symbology **52** printed thereon. First label **50** may further contain additional encoded or printed information thereon such as container identification symbology. Such identification symbology includes a bar code **53** and/or an alphanumeric indicia **54,** either or both of which may include, but is not limited to, information identifying the specific type of the container, the manufacturer lot number, the expiration date, the size and/or shape of the container and the reagents and/or additives included within the container.

With reference to **FIG. 5B** and **5C****,** and with continued reference to **FIG. 5A****,** an identification label **55** is provided for placement on container **1.** Identification label **55** includes a first barcode **56** and a second barcode **57** printed thereon. First barcode **56** and second barcode **57** are each of different formats; however, at least a subset of the same information is encoded by each of the barcodes. As with prior embodiments, the information may be any type of information, including identification or tracking information.

Identification label **55** is provided as a second label capable of being affixed over first label **50.** Identification label **55** further includes an alignment area **58** corresponding to alignment symbology **52** of first label **50.** Alignment area **58** may be, for example, an opening or notched cut-away of identification label **55.** For example, as shown in **FIGS. 5A** and **5B****,** alignment symbology **52** is in the form of a v-shaped triangle and alignment area **58** is a v-shaped notch appearing on the edge of identification label **55.** Alternatively, alignment area **58** may be a **transparent** portion having a shape designed to fit over alignment symbology **52.**

Identification label **55** is positioned on container **1** such that alignment area **58** of identification label **55** is aligned with alignment symbology **52** of first label **50,** with alignment symbology **52** being detectable through alignment area **58,** thereby assuring proper alignment of the identification label on container **1.**

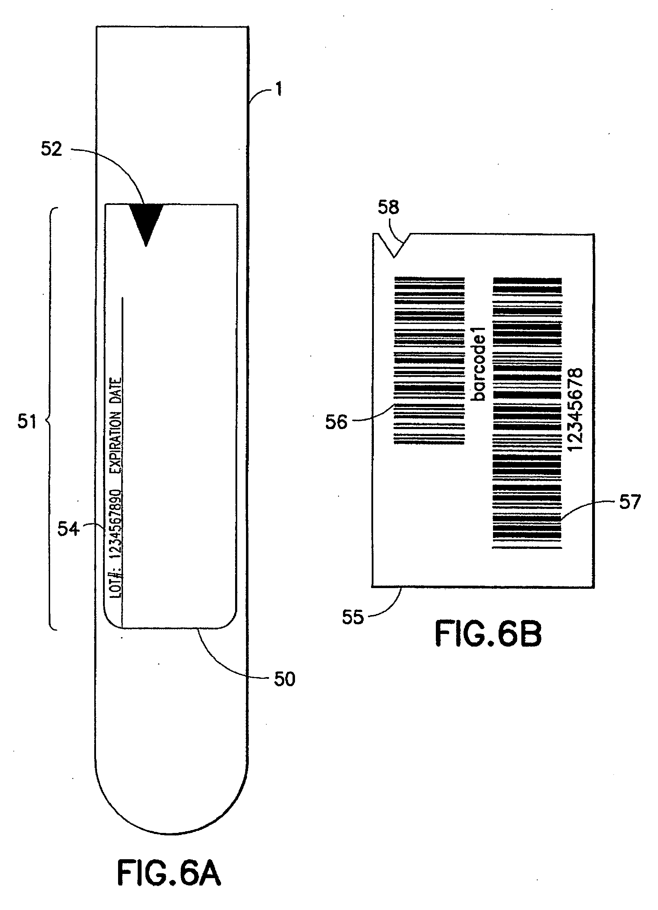

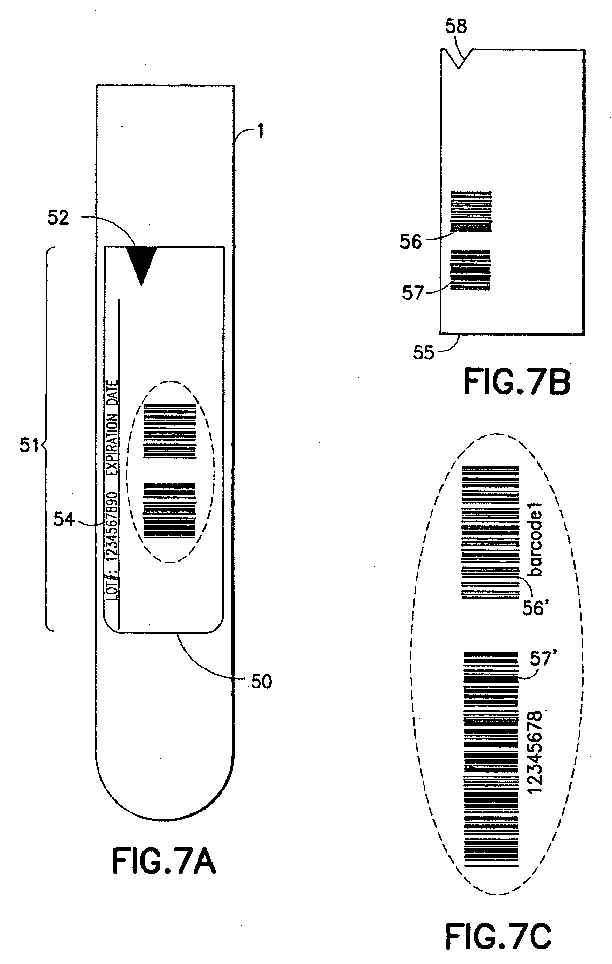

With reference to **FIGS. 6A** and **6B****,** first label **50** may alternatively include only alphanumeric indicia **54** without a barcode. With reference to **FIGS. 7A-7C****,** first label **50** may include a first barcode **56'** and a second barcode **57'** that correspond to first barcode **56** and second barcode **57** of identification label **55.**

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements. For example, while the embodiments illustrated herein show two barcode formats on a label or container, three or more formats may be used. In addition, while various barcode format types are listed herein, other barcode formats not listed may be utilized by the one or more embodiments of the present invention. Also, while the embodiments are illustrated with barcodes displayed on one or more labels, in accordance with an embodiment of the invention, one or more of the barcodes may be displayed directly on the container. Furthermore, while information is provided by barcodes of different formats in accordance with an embodiment of the present invention, in yet another embodiment some other form of machine readable code may be used. Moreover, it is to be understood that the present invention contemplates that, to the extent possible, one or more features of any embodiment can be combined with one or more features of any other embodiment.

## Claims

1. A sample collection container (1) with a label (3) positioned on the sample collection container (1), the label comprising:
a first area (7) having a first barcode (11) printed thereon; and
a second area (9) having a second barcode (13) printed thereon, **characterized in that**
the first barcode (11) is of a first format, the second barcode (13) is of a second format and each barcode encodes at least a subset of identical information; and
the label (3) includes an alignment area (58) and the sample collection container (1) includes alignment symbology (52).

2. The sample collection container of claim 1, wherein the first format is selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE, and the second format is selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE.

3. The sample collection container of claim 1, wherein the first format is CODE 39 and the second format is CODE 128.

4. The sample collection container of claim 1, wherein the alignment area (58) is aligned with the alignment symbology (52) of the sample collection container (1) thereby allowing for proper positioning of the label (3) on the sample collection container (1),

5. The sample collection container of claim 1, wherein the subset of identical information encoded in the first barcode (11) and the second barcode (13) is information identifying the patient, the type of sample, or date or time of sampling, or any combination thereof.

6. The sample collection container of claim 1, wherein all of the information encoded in the first barcode (11) is identical to all of the information encoded in the second barcode (13).

7. The sample collection container (1) as defined in any one of claims 1 to 6, further comprising:
an elongate member having a first end and a second end; and
the label (3) is positioned between the first end and the second end.

8. A method of identifying information corresponding to a sample collection container (1), the method comprising the steps of:
providing a sample collection container (1) with a label (3) adhered thereto, the label (3) comprising: a first area (7) having a first barcode (11) of a first format printed thereon, a second area (9) having a second barcode (13) of a second format printed thereon, the first barcode (11) and the second barcode (13) encoding at least a subset of identical information, wherein the label (3) includes an alignment area (58) and the sample collection container (1) includes alignment symbology (52) such that the alignment area (58) is in alignment with the alignment symbology (52) of the sample container (1) thereby allowing for proper positioning of the label (3) on the sample container (1);
scanning the first area (7) of the label (3) to determine the information encoded thereon; and,
if the step of scanning the first area (7) of the label (3) fails, scanning the second area (9) of the label (3) to determine the information encoded thereon.

9. The method of claim 8, wherein the subset of identical information is at least one of a content, a type, a patient and a test procedure performed corresponding to the sample collection container (1).

10. The method of claim 8, wherein the first format is selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE, and the second format is selected from the group of UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX and MAXICODE.

11. The method of claim 8, wherein the steps of scanning are performed by a barcode reader of an automated testing station.

12. The method of claim 8, wherein all of the information encoded in the first barcode (11) is identical to all of the information encoded in the second barcode (13).

## Patentansprüche

1. Probensammelbehälter (1) mit einem Etikett (3), das sich auf dem Probensammelbehälter (1) befindet, wobei das Etikett Folgendes umfasst:
einen ersten Bereich (7) mit einem darauf gedruckten ersten Strichcode (11); und
einen zweiten Bereich (9) mit einem darauf gedruckten zweiten Strichcode (13);
**dadurch gekennzeichnet, dass**
der erste Strichcode (11) ein erstes Format hat, der zweite Strichcode (13) ein zweites Format hat und jeder Strichcode wenigstens eine Teilmenge identischer Informationen codiert; und
das Etikett (3) einen Ausrichtungsbereich (58) umfasst und der Probensammelbehälter (1) Ausrichtungssymbole (52) umfasst.

2. Probensammelbehälter gemäß Anspruch 1, wobei das erste Format aus der Gruppe UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX und MAXICODE ausgewählt ist und das zweite Format aus der Gruppe UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX und MAXICODE ausgewählt ist.

3. Probensammelbehälter gemäß Anspruch 1, wobei es sich bei dem ersten Format um CODE 39 und bei dem zweiten Format um CODE 128 handelt.

4. Probensammelbehälter gemäß Anspruch 1, wobei der Ausrichtungsbereich (58) an den Ausrichtungssymbolen (52) des Probensammelbehälters (1) ausgerichtet ist, was die richtige Positionierung des Etiketts (3) auf dem Probensammelbehälter (1) ermöglicht.

5. Probensammelbehälter gemäß Anspruch 1, wobei es sich bei der Teilmenge identischer Informationen, die im ersten Strichcode (11) und im zweiten Strichcode (13) codiert ist, um Informationen handelt, die den Patienten, die Art der Probe oder das Datum oder die Uhrzeit der Probenahme oder irgendeine Kombination davon identifizieren.

6. Probensammelbehälter gemäß Anspruch 1, wobei die gesamte Information, die im ersten Strichcode (11) codiert ist, mit der gesamten Information, die im zweiten Strichcode (13) codiert ist, identisch ist.

7. Probensammelbehälter (1) gemäß einem der Ansprüche 1 bis 6, weiterhin umfassend:
ein längliches Element mit einem ersten Ende und einem zweiten Ende; und
wobei sich das Etikett (3) zwischen dem ersten Ende und dem zweiten Ende befindet.

8. Verfahren zum Identifizieren von Informationen, die einem Probensammelbehälter (1) entsprechen, wobei das Verfahren die folgenden Schritte umfasst:
Bereitstellen eines Probensammelbehälters (1) mit einem daran gehefteten Etikett (3), wobei das Etikett (3) Folgendes umfasst: einen ersten Bereich (7) mit einem darauf gedruckten ersten Strichcode (11) in einem ersten Format, einen zweiten Bereich (9) mit einem darauf gedruckten zweiten Strichcode (13) in einem zweiten Format, wobei der erste Strichcode (11) und der zweite Strichcode (13) wenigstens eine Teilmenge identischer Informationen codieren, wobei das Etikett (3) einen Ausrichtungsbereich (58) umfasst und der Probensammelbehälter (1) Ausrichtungssymbole (52) umfasst, so dass der Ausrichtungsbereich (58) an den Ausrichtungssymbolen (52) des Probenbehälters (1) ausgerichtet ist, was die richtige Positionierung des Etiketts (3) auf dem Probenbehälter (1) ermöglicht;
Abtasten des ersten Bereichs (7) des Etiketts (3), um die darauf codierte Information zu bestimmen; und
wenn der Schritt des Abtastens des ersten Bereichs (7) des Etiketts (3) nicht gelingt, Abtasten des zweiten Bereichs (9) des Etiketts (3), um die darauf codierte Information zu bestimmen.

9. Verfahren gemäß Anspruch 8, wobei es sich bei der Teilmenge identischer Informationen um einen Inhalt, eine Art, einen Patienten und/oder ein durchgeführtes Testverfahren handelt, die dem Probensammelbehälter (1) entsprechen.

10. Verfahren gemäß Anspruch 8, wobei das erste Format aus der Gruppe UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX und MAXICODE ausgewählt ist und das zweite Format aus der Gruppe UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX und MAXICODE ausgewählt ist.

11. Verfahren gemäß Anspruch 8, wobei die Schritte des Abtastens durch ein Strichcode-Lesegerät einer automatischen Teststation durchgeführt werden.

12. Verfahren gemäß Anspruch 8, wobei die gesamte Information, die im ersten Strichcode (11) codiert ist, mit der gesamten Information, die im zweiten Strichcode (13) codiert ist, identisch ist.

## Revendications

1. Récipient collecteur d'échantillons (1) avec une étiquette (3) située sur le récipient collecteur d'échantillons (1), l'étiquette comprenant :
une première zone (7) sur laquelle un premier code à barres (11) est imprimé ; et
une seconde zone (9) sur laquelle un second code à barres (13) est imprimé ;
**caractérisé en ce que** le premier code à barres (11) est dans un premier format, le second code à barres (13) est dans un second format, et chaque code à barres code au moins un sous-ensemble de données identiques ; et
l'étiquette (3) renferme une zone d'alignement (58) et le récipient collecteur d'échantillons (1) renferme des symboles d'alignement (52).

2. Récipient collecteur d'échantillons selon la revendication 1, dans lequel le premier format est choisi dans le groupe consistant en UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX et MAXICODE, et le second format est choisi dans le groupe consistant en UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX et MAXICODE.

3. Récipient collecteur d'échantillons selon la revendication 1, dans lequel le premier format est le CODE 39 et le second format est le CODE 128.

4. Récipient collecteur d'échantillons selon la revendication 1, dans lequel la zone d'alignement (58) est alignée sur les symboles d'alignement (52) du récipient collecteur d'échantillons (1) pour ainsi permettre un positionnement adéquat de l'étiquette (3) sur le récipient collecteur d'échantillons (1).

5. Récipient collecteur d'échantillons selon la revendication 1, dans lequel le sous-ensemble de données identiques codé dans le premier code à barres (11) et dans le second code à barres (13) est des données identifiant le patient, le type d'échantillon, ou la date ou l'heure de prélèvement, ou une combinaison quelconque de ceux-ci.

6. Récipient collecteur d'échantillons selon la revendication 1, dans lequel toutes les données codées dans le premier code à barres (11) sont identiques avec toutes les données codées dans le second code à barres (13).

7. Récipient collecteur d'échantillons (1) selon l'une quelconque des revendications 1 à 6, comprenant en outre :
un élément allongé ayant une première extrémité et une seconde extrémité ; et
l'étiquette (3) est située entre la première extrémité et la seconde extrémité.

8. Procédé pour l'identification de données correspondant à un récipient collecteur d'échantillons (1), le procédé comprenant les étapes consistant à :
procurer un récipient collecteur d'échantillons (1) avec une étiquette (3) adhérée dessus, l'étiquette (3) comprenant : une première zone (7) sur laquelle un premier code à barres (11) dans un premier format est imprimé, une seconde zone (9) sur laquelle un second code à barres (13) dans un second format est imprimé, le premier code à barres (11) et le second code à barres (13) codant au moins un sous-ensemble de données identiques, dans lequel l'étiquette (3) renferme une zone d'alignement (58) et le récipient collecteur d'échantillons (1) renferme des symboles d'alignement (52) de manière que la zone d'alignement (58) soit alignée sur les symboles d'alignement (52) du récipient d'échantillons (1) pour ainsi permettre un positionnement adéquat de l'étiquette (3) sur le récipient d'échantillons (1) ;
balayer la première zone (7) de l'étiquette (3) pour déterminer les données codées dessus ; et
lorsque l'étape consistant à balayer la première zone (7) de l'étiquette (3) échoue, balayer la seconde zone (9) de l'étiquette (3) pour déterminer les données codées dessus.

9. Procédé selon la revendication 8, dans lequel le sous-ensemble de données identiques est un contenu, un type, un patient et une procédure d'essai réalisée, correspondant au récipient collecteur d'échantillons (1).

10. Procédé selon la revendication 8, dans lequel le premier format est choisi dans le groupe consistant en UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX et MAXICODE, et le second format est choisi dans le groupe consistant en UPC, EAN, EANUCC, CODABAR, CODE 39, CODE 128, Interleaved 2/5, Discrete 2/5, Postnet, BPO, CODE 49, CODE 16K, PDF417, AZTEC, DATAMATRIX et MAXICODE.

11. Procédé selon la revendication 8, dans lequel les étapes consistant à balayer sont effectuées par un lecteur de codes à barres d'une station d'essai automatique.

12. Procédé selon la revendication 8, dans lequel toutes les données codées dans le premier code à barres (11) sont identiques avec toutes les données codées dans le second code à barres (13).
